# EUROPEAN PATENT SPECIFICATION

(11) **EP 3 269 250 B1**
(45) Date of publication and mention of the grant of the patent: **28.11.2018**
(21) Application number: 16020418.6
(22) Date of filing: 25.10.2016
(51) Int. Cl.: A23G 1/18, A23G 1/46, A23G 1/00

(54) **PROCESS FOR CONTINUOUS TEMPERING OF FAT-CONTAINING, CRYSTALLIZABLE MASS SUCH AS CHOCOLATE MASS**
VERFAHREN ZUM KONTINUIERLICHEN TEMPERIEREN VON FETTHALTIGER, KRISTALLISIERBARER MASSE WIE ETWA SCHOKOLADENMASSE
PROCÉDÉ DE TREMPAGE CONTINU DE SUBSTANCE CRISTALLISABLE CONTENANT DES MATIÈRES GRASSES COMME LE CHOCOLAT

(30) Priority: 15.07.2016 EP 16020271
(43) Date of publication of application: 17.01.2018
(73) Proprietor: Aasted ApS, 3520 Farum (DK)
(72) Inventor: HOLMUD, Dennis, 2860 Søborg (DK)
(74) Representative: Heiden, Finn

(56) References cited:
- EP-A1- 0 685 168
- EP-A1- 1 616 487
- EP-A2- 0 289 849
- EP-A2- 0 806 149
- EP-A2- 2 210 500
- DE-C1- 10 118 354

## Description

The present invention concerns a process for continuous tempering of a fat-containing, crystallizable mass, such as chocolate mass, nougat mass or creme mass being crystal-free and is pumped as a complete stream to a cooling stage in which it is cooled to above the crystal-creation temperature so that the particular mass is still crystal-free, whereafter the mass is pumped through a crystallization stage in a column comprising of mass chambers and intermediary water chambers arranged in stacked elements, a central drive shaft in engagement with mixing and shearing elements arranged in the mass chambers, so that crystals have been created in the mass when leaving the crystallization stage.

The invention also relates to the use of an apparatus as in claim 13 for continuous tempering of a fat-containing, crystallisable mass such as chocolate mass or creme mass.

Generally, chocolate or creme mass continuously tempered by the process according to the invention encompass all types of suspensions of non-fat particles such as sugar, milk powders and cocoa solids mixed up with a liquid fat constituent, so that the suspensions are capable of crystallizing. It could be both chocolate types used in any kind of production of chocolate articles or it could be creme mass used inside articles as filling, upon or as "sandwiching" layers in articles in both production of bakery articles as well as of chocolate articles. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

For the continuous tempering to be performed, it is decisive, that whether the fat phase constitutes of genuine cocoa butter or substitutes, the fat phase must be capable of crystallizing into stable crystal types, such as the βV-crystals developing in genuine cocoa butter. However, it is important to avoid instable crystals in the solidified mass. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

For the manufacturers of articles made by such masses, it is always desirable, that the prior art tempering process and apparatus can deliver tempered mass having a content of the stable crystal-type only, such as βV-crystals in chocolate mass. Only then, the manufacturer can rely on, that the quality of his chocolate products are consistent.

The prior tempering columns of the introductory art comprise a cooling stage, a crystallization stage and a reheating stage arranged in the column. The stages are typically arranged each in their own separate section of the column, often separated by an isolation disc between neighboring chambers. Some apparatuses have the cooling and crystallization stages arranged in the same section of the column. However, all the prior art apparatuses have columns, which are high, heavy and extensive.

Before the chocolate or creme mass is supplied to perform the actual tempering process it is heated to around 40-50°C in a premature step. All the crystals in the particular mass are melted out and dissolved in the mass before the mass is pumped continuously through the cooling stage of the column. The premature step is typically arranged distant to the tempering apparatus, the mass being heated in a storage tank. However, a premature heating step could also be arranged in the tempering column in front of the cooling stage, which then makes the column even higher.

The chamber surfaces of the cooling and crystallisation stages are kept "cold" with temperatures typically between 8-15 °C regulated by the temperature and flow of the water in the intermediary chambers. The low temperatures are necessary for the heat-exchange of the cooling and crystallisation stages of the column to be as effective as possible. Otherwise, the columns would be even higher for a particular maximum capacity and mass type. However, the disadvantages of the "cold" surface temperatures in the cooling and crystallisation chambers are creation of in-stable crystals simultaneously with the creation of the stable crystals. This phenomenon is especially extensive in the cooling stage.

In the reheating stage, the temperature of the mass is raised only slightly being sufficient for melting up again the in-stable crystals only. They are then not present in the mass any longer, however, the desirable stable crystals, such as the βV-crystals in chocolate, are still preserved. A high and extensive reheating stage of the column is necessary when complete re-melting of the undesirable, instable crystals must be ensured.

When mass with high fat content such as milk chocolate, white chocolate, nougat or filling mass for pralines are tempered, then the amount of in-stable crystals created in the cooling stage is often much too high. The surfaces must be even colder for obtaining an acceptable capacity of tempered mass per hour. So, when chocolate with high fat content is tempered, then, the problems of the high columns are even more relevant

A given size of a tempering machine at the market has a fixed length of the column and consequently fixed areas for cooling, crystallisation and reheating.
Due to the above described problematic of continuous tempering of masses with a high fat content, it is well-known today, that the maximum capacity measured in kilograms per hour of tempered mass for a given tempering machine at the market, is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered. When high fat recipes having fat content between 40% and 100% are tempered, the maximum capacity is lowered up to 50%.

Another major disadvantage for the high columns is a very high energy consumption, firstly for cooling down the total mass and secondly for reheating the mass. Also the energy requirements are high for the chocolate pumps and the gear motors of the tempering columns.

The center of gravity of the columns are high above the floor level, which makes the apparatus difficult and cumbersome to transport, maneuver and install in factories. When adapted for tempering of higher capacities of mass, such as typically more than 3000kg/hour, the apparatuses are so high, that they have to be tilted or laid down to horizontal during handling and transportation. This especially applies when the apparatuses are adapted for tempering of mass with high fat-content such as nougat, raw chocolate mass or chocolate liquor requiring around the double cooling capacity than dark chocolate. The columns constitute of heavy cast-iron elements each having a water and a mass chamber. Each element of the big columns may weight up to more than hundred kilograms. When being stacked upon each other the elements constitute the column. Handling and stacking of the heavy elements are difficult and time-consuming and has to be done directly on the apparatus support frame for the bigger versions. Afterwards, the high and heavy columns are difficult to handle and move around in the production environment, for example when the electrical installations has to be made in another area of the factory.

A problem to be solved is to provide a process for continuous tempering which is more effective than the prior art in terms of reducing the total energy consumption for the process.
Another problem is to reduce the creation of undesirable, in-stable crystals in the mass which give rise to several unwanted characteristics, such as excessive energy consumption for being remelted at the end of the process, and if remained in the mass; release of heat in the mass during solidification, lower quality of the final chocolate articles, especially shorter-shelf-life thereof due to fat-migration to the surface.
A further problem is to reduce the cooling period for the final chocolate articles.

EP2210500A2 discloses a process and use of an apparatus for continuous tempering of a fat-containing, crystallisable mass such as chocolate mass, comprising a cooler or heat exchanger connected via a pump with a tempering apparatus. The mass is cooled in the cooler or heat exchanger before it is split in two streams of which one enters the tempering apparatus and the other stream by-passes the tempering apparatus. The two streams are thereafter mixed together. The disclosure is silent about the layout of the heat exchanger and the process thereof. EP1616487A1 discloses a process and use of an apparatus for continuous tempering of a fat-containing, crystallisable mass such as chocolate mass, comprising a column of mass chambers and intermediary water chambers arranged in stacked elements, a central drive shaft in engagement with mixing elements arranged in the mass chambers, and which crystallization stage is arranged in the column. However, the cooling stage is also arranged in the column. A closed-loop is arranged for reversing part of the crystallized mass to the column. In the closed-loop circuit is arranged a dynamic heat exchanger comprising moving parts, especially scraper elements which continuously removes mass from the surfaces.

EP0685168A1 discloses an apparatus by which a process comprises a cooling stage A1, a crystallization stage Ak and a reheating stage A2, which are arranged in a column. The column itself is high and heavy with the center of gravity at a high level. The apparatuses are then both cumbersome and difficult to build, handle and install in a chocolate production factory.

The inventive process is characterized in, that when entering the cooling stage the mass is divided into a row of several parallel, plate-like streams of mass, which are simultaneously cooled by a row of intermediary, plate-like streams of cooling water until the mass is being collected again to a complete stream.

The inventive process is performed in an apparatus whereby the cooling stage is arranged in a heat exchanger having at least one row of parallel plates arranged in a stack sealed at their edges providing intermediary, neighbouring channels each having an inlet hole and an outlet hole in each of the plates, that every second channel in the row is connected with a common first inlet channel created by the first inlet holes in the plates and a common first outlet channel created by the first outlet holes in the plates for the flow of mass there through,
and that each of the intermittent, neighbouring channels are connected with a common second inlet channel created by the second inlet holes in the plates and a common second outlet channel created by the second outlet holes in the plates for the flow of water medium there through.

In the common first inlet channel the mass is being split into several streams when entering each second channel in the row. The mass is then flowing in a row of parallel streams through the heat exchanger, simultaneously being tempered by intermittent, neighboring channels each with water medium flowing there through.

The tempering of the parallel streams of mass is highly effective. Consequently, the heat exchanger has much smaller outside dimensions than the cooling stage of a prior art column, but is however, still achieving the same cooling effect. Advantageously, the cooling stage heat exchanger fits in several places in the apparatus beside the column, so that the cooling stage is no longer part of the column itself. The inventive process then provides for an apparatus that is then both smaller in size and much lower in height than the prior art apparatus. The weight savings are very high as the inventive plate heat exchanger typically reduces the weight of the cooling stage 200-500% in comparison with the prior art apparatus.

The mass channels of the cooling stage heat exchanger of the apparatus are free from any intermediary scrapers, discs or wings moving through the chambers such as by the cooling stages of the prior columns. The channels are slim in comparison to the extension of the plates. The row of the many parallel channels ensure that the mass is split into several "plate-like" streams, each of them all being exposed to accurately the same tempering conditions exercised by each of the intermittent, neighboring water channels. The heat exchanger with the inventive process is then much more effective than a column of the same volume. When comparing length or width of the inventive process cooling stage heat exchanger with diameter of the column, the heat exchanger is superior.

The plates of the row of parallel plates can have several forms such as being planar or corrugated as long as the mass is flowing in a row of parallel streams through the cooling stage heat exchanger, simultaneously being tempered by intermittent, neighboring channels each with water medium flowing there through.

When the channels or streams of mass have a width of 1-10 mm, the mass flow through the channels simultaneously as a row of parallel plates or sheets. Most preferably, the channels or the streams have a width of 2-5 mm, so that the mass flow through the channels as thick, separated pages in a big book. When the channels or the streams have a width of 1-2 mm the mass flow as film-like sheets or as pages in a big book.

The cooled mass is completely homogenous and uniform in constitution and temperature when leaving the common first outlet channel. The temperature of the mass leaving the common first outlet channel is then controlled sharply within tenths of a degree. Consequently, the particular mass can be controlled exactly to a temperature just above the crystal-creating temperature of that mass. This is especially desirable when high-quality mass is tempered. No crystals are made in the mass in the cooling stage, and when the mass enters the crystallization stage of the column, very little cooling is necessary for the creation of the crystals. With other words, the mass is cooled in the plate heat exchanger without the creation of any crystals, which then is ignited when the mass enters the crystallization stage of the column. When no crystals are made in the inventive cooling stage - neither the desirable βV-crystals for chocolate mass, nor any lower melting crystals, such as the βIV-crystals, then is the process extremely well-controlled.

When the direction of flow of the row of plate-like streams of mass are the opposite of the direction of flow of the row of intermediary, plate-like streams of cooling water, and the mass is cooled to a temperature, which is above 23°C and below 26°C then is an "under-cooling" of the chocolate mass achieved. The mass is still completely free from any content of In-stable crystals such as BetalV crystals. When the mass is applied Shear energy such as from stirring elements in the crystallization stage the only crystals created are the desirable BetaV crystals. Consequently any reheating for removing undesirable crystals are omitted.

Decisive is also, that no shear is provided to the mass in the cooling stage such as being done by the cooling stage stirring elements of the prior art processes. The thin rows of plate-like streams in the cooling process provides for a complete homogenous heat exchange of all mass parts trough the cooling stage so that all the mass is in a "sharp" and homogeneous energy balance maintaining that no crystals are created - neither in-stable crystals nor the desirable, stable BetaV crystals. The applied "sur-plus" cooling energy is so to say accumulated and ready to be released directly as crystallization of the BetaV crystals when shear is applied. So when all the mass streams are cooled and collected in a complete stream only appliance of shear is necessary for the desirable BetaV crystals to be created in the mass. The temperature of the mass is kept constant or lowered slightly up to 1,0°C passing through the crystallization stage. The effect applies for all mass recipes having a content of cocoa butter which is able to crystallize into BetaV crystals. It is observed that the mass crystallizes directly into the BetaV crystals only - no other crystal-types are created. Consequently, the reheating stage of the process and columns is avoided and can be omitted.
The process is then highly quality ensuring for the tempered mass and the final articles. It is also reducing the energy consumption for the complete process considerably.
The temperature of the water entering the cooling stage is preferable a few tenth of a degree up to 2,0°C colder than the mass leaving the cooling stage, thereby the temperature of the water entering the stage is above 19°C and below 25°C.

When the mass is milk-chocolate, the temperature of the cooling water is 24°C and the temperature of the milk chocolate mass is 25°C when cooled, and the temperature of the milk chocolate mass is 24,5°C when having passed through the crystallization stage.

When chocolate raw mass such as cocoa liquor or cocoa butter is tempered by the inventive process and deposited in major moulds for making chocolate tablets or bricks with a weight from 2,5 kg up to 500 kg, the solidification time is reduced at least to a third of before. The excessive heat which remained in the center of the big articles or blocks giving rise to trapped heat and consequently internal reheating and remelting of BetaV crystals as by the prior tempering processes are not present any longer. Blocks of cocoa liquor or of cocoa butter tempered by the prior art tempering processes could be around 48-60 hours in solidification and still be soft and spongy in the central section. With the inventive process the tablets and blocks are firm and solid in the centers allready after a few hours having a content of purely BetaV crystals. Quality is improved which is really important for the manufacturers as the blocks serve as raw materials for chocolate recipes applied by the manufacturers of chocolate articles. Expensive cooling time and handling is spared as the blocks releases the moulds nicely as BetaV crystals always contracts a few percent at solidification.

When applying the process for tempering of chocolate mass in a moulding line, where the articles are deposited in multiple cavities in plastic moulds thereafter continuously passing through a cooling tunnel, then the articles or shells solidifies very fast in comparison with the prior art process. The articles have no remains of latent heat which must be removed during cooling in the tunnel. Instead the heat to be removed from the articles are vanishing and just blowing air through the tunnel without applying cooling energy is satisfactory. The cooling tunnels can be shortened in length more than 50%. The quality of the articles are the highest possible having a content of stable BetaV crystals only.

The same advantages apply when the inventive process is used for tempering of chocolate mass in an enrobing line being deposited on pre-made article centers which are thereafter continuously passing through a cooling tunnel. The enrobed chocolate layer is top-quality and solidification thereof is fast.

When the inventive process is used for tempering of chocolate mass to be deposited in cavities in plastic moulds and pressed by immersed cold plungers thereby making chocolate shells the solidification is so fast and without any remaining heat to be removed that the cooling tunnel can be avoided.

When the inventive process is used for tempering of chocolate mass to be deposited as drops or lumps or chips or the like spots on an underlying continuously driven steel or plastic web, the chocolate articles solidifies in a few seconds on the colder web. At many of these productions the cooling tunnels can be omitted.

The use of an apparatus comprising a cooling stage connected with a crystallisation stage, comprising a column of mass chambers and intermediary water chambers arranged in stacked elements, a central drive shaft in engagement with mixing elements arranged in the mass chambers, and which crystallisation stage is arranged in the column, that the cooling stage is arranged in a heat exchanger having at least one row of parallel plates arranged in a stack sealed at their edges providing intermediary, neighboring channels each having an inlet hole and an outlet hole in each of the plates, that every second channel in the row is connected with a common first channel created by the first inlet holes in the plates and a common first outlet channel created by the first outlet holes in the plates for the flow of mass there through, and that each of the intermittent, neighboring channels are connected with a common second inlet channel created by the second inlet holes in the plates and a common second outlet channel created by the second outlet holes in the plates for the flow of water medium there through for continuous tempering of a fat-containing, crystallisable mass such as chocolate mass or creme mass is providing a chocolate mass that requires a minimum of cooling energy to solidify and has a content of BetaV crystals only, so that the quality of the solidified articles are the highest possible.

The invention is explained further below under reference to preferred embodiments as well as the drawing, in which
fig. 1 is a schematic view of the tempering apparatus performing the inventive process, seen from the front and with a plate-housing disclosed in dotted line,
fig. 2 is the same as in figure 1, seen from the side,
fig. 3 is a perspective view of a heat exchanger comprising the cooling stage of the apparatus of figures 1 and 2,
fig. 4 is the same as in figure 3, seen in cross section from the mass inlet to mass outlet,
fig. 5 is some of the plates and intermediary gaskets from the cooling stage heat exchanger of figures 3 and 4, seen in perspective,
fig. 6 is a schematic view of a cross section from water inlet to water outlet of the cooling stage heat exchanger of figure 3,
fig. 6b is a detail of the cooling stage heat exchanger of fig. 6,
fig. 7 is another embodiment of the apparatus of figure 1 with a pre-heating stage for the mass arranged in a further inventive heat exchanger, seen from the side,
fig. 8 is a schematic view of another embodiment of the tempering apparatus, seen from the front and with a plate-housing disclosed in dotted line,
fig. 9 is the same as in figure 8, seen from the side,
fig. 10 is schematic view of a prior art tempering column, the tempering apparatus of figures 7 and 8, and the tempering apparatus of figures 1 and 2, and
fig. 11 is an element of the tempering columns, seen in vertical section.

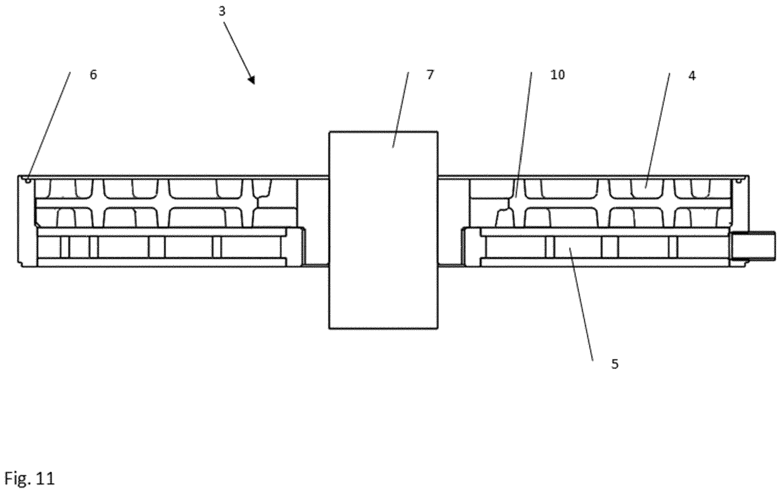

The apparatus 1 for the inventive process of continuous tempering of fat-containing, crystallisable mass such as chocolate mass or creme mass comprises a column 2 of stacked circular elements 3 made of cast-iron. Each element 3 has an upper mass chamber 4 and a lower water chamber 5, as disclosed in figure 11. By the stacking of the elements 3, gaskets 6 ensures that the mass chambers 4 are closed of properly between the neighbouring elements 3. All the mass chambers 4 in the column are connected with each other by non-disclosed openings providing passage vertically through the water chambers 5. The water chambers 5 of the elements 3 are connected to each other in a particular crystallisation or re-heating stage. All the elements 3 in the crystallisation stage are connected to each other and to a supply of temperature controlled water. Many different layouts of water circulation systems are well-known, so these are not described in further detail.

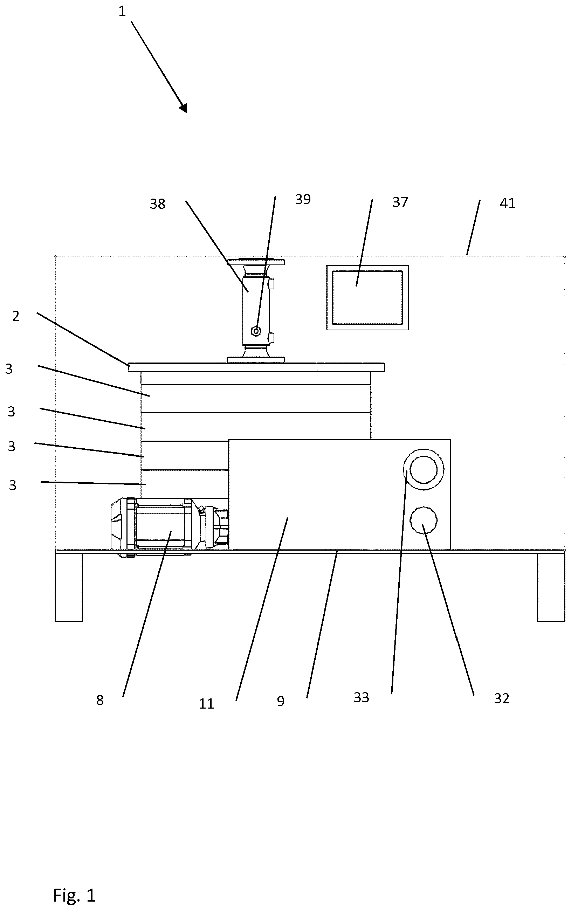

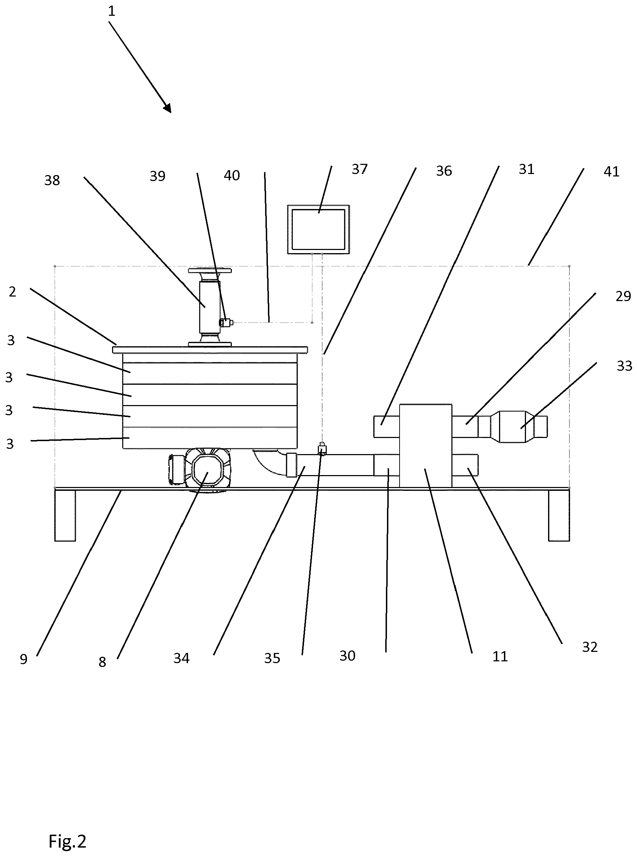

A central drive shaft 7 is shown schematically in part, and is driven by a gear motor 8 arranged on the frame or support 9 of the apparatus 1, as disclosed in figure 1 and 2. The drive shaft 7 is in engagement with mixing elements 10 arranged in each of the mass chambers 4. The mixing elements 10 of the known columns are propels, discs or even planetary mixers. In figure 11 is disclosed a commonly applied mixing propel, seen in section.

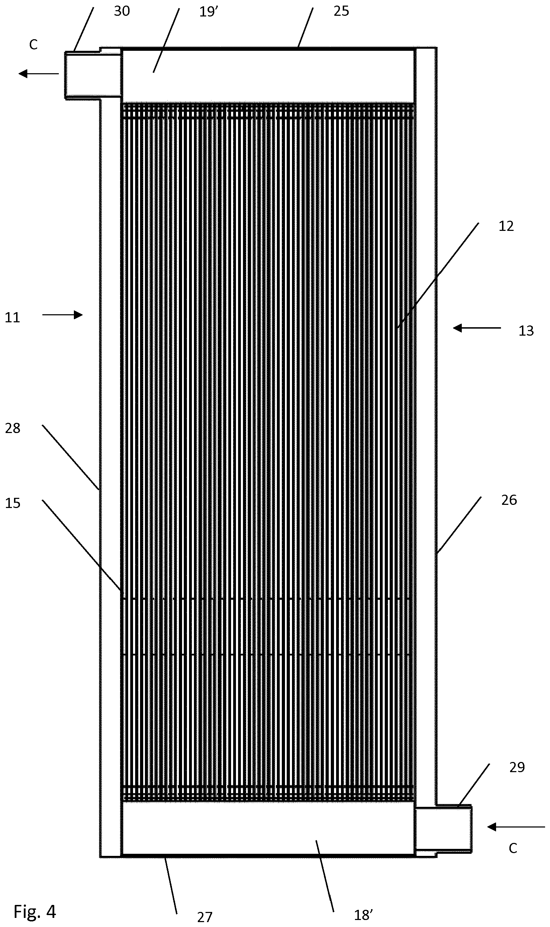

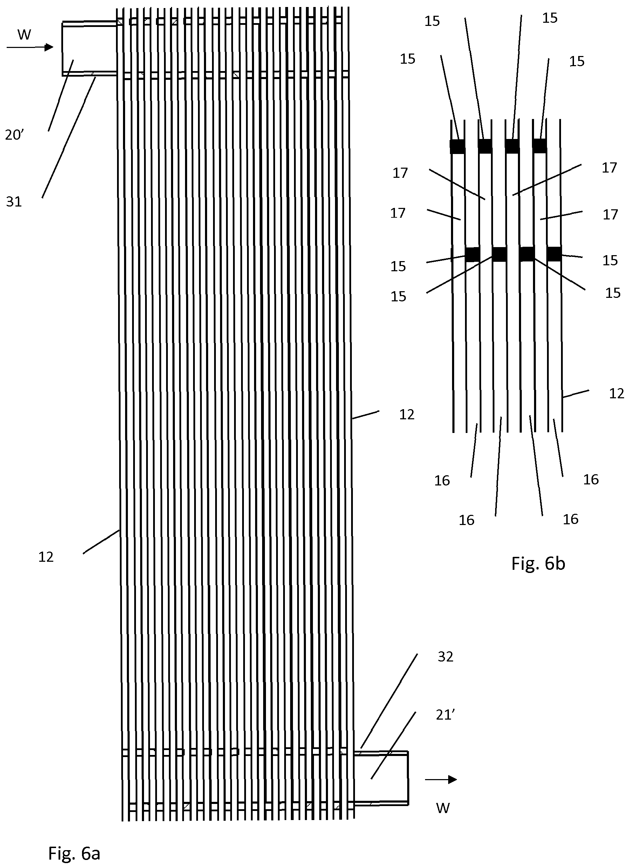

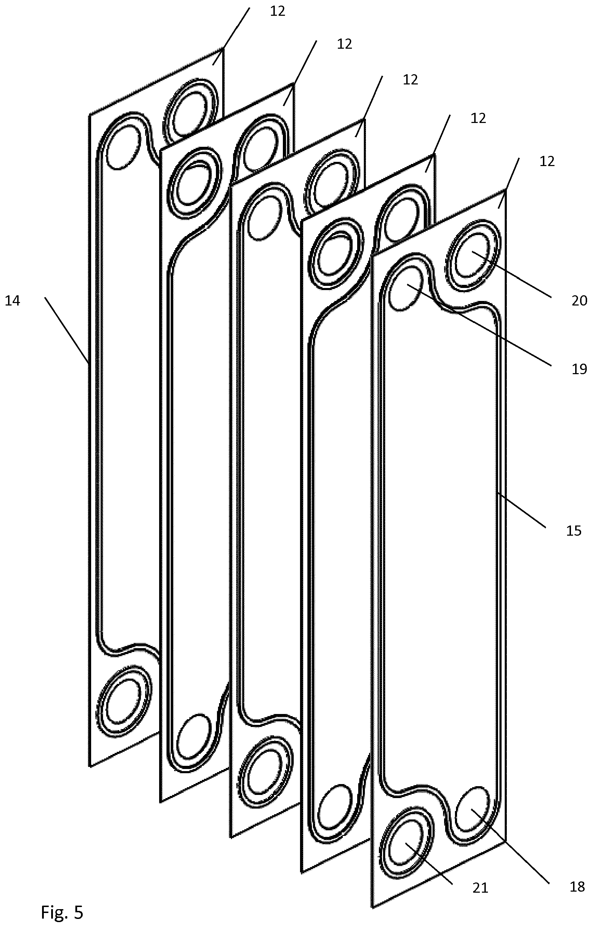

The cooling stage of the mass tempering apparatus 1 is arranged in a heat exchanger 11 having a row of parallel plates 12 arranged in a stack 13, i.e. figures 1-6. The plates 12 are mutually sealed by intermediary gaskets 15 at their neighbouring surfaces, typically close to their edges 14 or periphery, i.e. figure 5. The "mass flow side" of the heat exchanger is disclosed in figure 4. The arrows C represents the flow of the chocolate. The common first inlet channel 18' and the common first outlet channel 19' for the mass, are disclosed in figure 4 in a simplified manner as created by blank holes 18 and 19. By studying figures 5 and 6 it is clearly seen, that the inlet channel 18' and outlet channel 19' for the mass are created by the holes in the plates.

The "water flow side" of the cooling stage heat exchanger is disclosed in figure 6a. In greater detail and in simplified view are in figure 6b disclosed the intermediary, neighbouring channels 16, 17 between the plates 12.

Every second channel 16 in the row of plates 12 are connected with the common first inlet channel 18' and the common first outlet channel 19' for the flow of mass there through. Each of the intermittent, neighbouring channels 17 are connected with a common second inlet channel 20' and a common second outlet channel 21' for the flow of water there through.

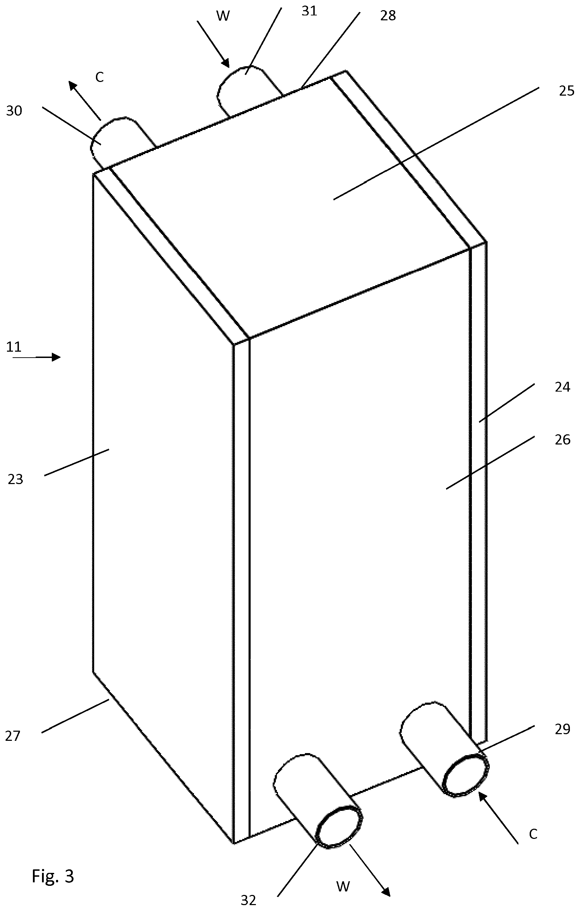

The figures 3-6 are schematic drawings focused on disclosing the principal build-up of the inventive cooling stage in terms of understanding the inventive solution. Especially may the number of plates 12 in practice deviate from the disclosed numbers.

The plates 12 are disclosed as being planar. However, they can have several other forms such as being corrugated or other types of depressions, as long as the mass is flowing simultaneously in a row of parallel streams being cooled by intermittent water channels through the heat exchanger.

At figure 3, the stack of plates 13 is arranged in a cubic box 22 made up of side panels 23-28, which provide for easy cleaning on the outside of the heat exchanger. However, many configurations are possible as long as the intermittent, neighbouring channels for mass and water are available. The stack of plates and intermittent gaskets may for example be arranged on bars and squeezed together, so the channels between the plates thereby are kept tight. Side panels are then not necessary.

The common first inlet channel 18' is connected with a mass inlet tube part 29 at one side 26 of the heat exchanger 11. The common first outlet channel 19' is connected with a mass outlet tube part 30 at the other side 28 of the exchanger 11, i.e. figures 3 and 4.

As disclosed in figures 3 and 6 is the common second inlet channel 20' connected with a water inlet tube part 31 arranged at the side 28 of the exchanger 11. The common second outlet channel 21' is connected with a water outlet tube part 32 arranged at the opposite side 26 of the exchanger 11. The arrows W depict the flow directions of the water. With this embodiment, the mass and the water are in counter-flow in the heat exchanger 11 providing a highly effective heat transfer between the mass and the colder water. The water inlet tube part 31 and the water outlet tube part 32 are adapted to be connected with a circuit of temperature regulated water, which is not disclosed, as it is not part of the invention as such. Important only, is that the circuit continuously delivers water flow to the inlet tube part 31, so that the heat exchanger is controlled to the desired extent or level for the temperature of the mass leaving the exchanger through the mass outlet tube part 30.

A mass pump 33 is connected to the mass inlet tube part 29 as disclosed in figure 2. The pump 33 is to its suction side adapted to be connected with a non-disclosed conduit leading mass to the pump from a tank or other supply of mass. The mass outlet tube part 30 at the other side of the cooling stage heat exchanger 11, is via a mass conduit 34 connected with the column 2. A temperature measurement unit 35 is arranged in the conduit 34 and is wired 36 to a control screen 37, which in this embodiment comprises a CPU or other process control unit. A mass outlet conduit 38 from the column comprises a second temperature measurement unit 39, which is also wired 40 to the control screen 37. A dotted line 41 represents the housing of the apparatus 1 in which the control screen 37 is arranged. In figure 1 is the control screen 37 shown in its correct position in the housing 41, however, in figure 2 the screen 37 is depicted schematically above the housing 41 for the sake of clarity.

During production the pump 33 runs continuously, so that the mass is feed from a storage tank and to the cooling stage heat exchanger 11. When the mass is a chocolate mass recipe it is heated in the storage tank to a temperature of 45-50 °C. The mass is then free from any crystals as the temperature is then well above the highest melting temperature for crystals available in solid chocolate mass.

In a liquid state is the mass pumped into the common first inlet channel 18', in which it is being split into several streams when entering each second channel 16, i.e. figures 4-6. The mass is then flowing simultaneously in a row of parallel streams through the channels 16 to be mixed again in the common first outlet channel 19'. Simultaneously, water is pumped to the common second inlet channel 20', in which it is being split into several streams by entering each second, intermittent, neighboring channel 17. Flowing through the parallel channels 17 the water is heat-exchanging with the mass in the channels 16, where after the water streams are mixed again in the common second outlet channel 21', i.e. figure 6.

The mass channels 16 of the cooling stage heat exchanger 11 are free from any intermediary scrapers, discs or wings moving through the chambers such as being common in the cooling stages of the prior columns. The channels 16 are slim, having a width of 1-10 mm, in comparison to the extension of the plates 12. The row of the many parallel channels 16 ensure, that the mass is split into several "plate-like" streams, which are simultaneously exposed to accurately the same cooling conditions exercised by each of the intermittent, neighboring water channels 17. When mass from each of the channels 16 are mixed again in the common first outlet channel 19', it is completely homogenous and is having the same temperature in all parts of the mass flow. In the cooling stages of the prior art columns the mass flow is mixed and cooled differently during its passage through the successive, serially connected mass chambers in the elements. The surface temperatures and mixing intensity of a particular mass chamber varies from center to periphery which provides for in-homogenous mass in a cooling stage.

In the embodiment disclosed, the channels have a width of 3 mm, so that the mass flows through the parallel channels 16 as parallel sheets or like thick pages in a big book.

The temperature of the uniform and homogenous mass leaving the common first outlet channel 19' of the cooling stage heat exchanger 11, is controlled sharply within tenths of a degree. A desired mass temperature is pre-set at the control screen 37, and is measured continuously by the mass temperature measurement unit 35 extending into the mass in the conduit 34, which is connecting the outlet 19 and the crystallization stage in the column 2. The CPU or computer of the control screen 37 then controls the cooling water temperature and flow continuously being delivered to the common second inlet channel 20'. The control is in accordance with the obtained mass temperature received from the unit 35, so that the cooling stage 11 removes the necessary heat from the mass for obtaining the desired pre-set mass temperature in the conduit 35.

Depending on the temperature, at which crystals are created in the particular mass, the pre-set temperature to be obtained at the unit 35 could be set slightly above the crystal-creation temperature. When the mass is a certain recipe of milk chocolate, the temperature could be set to 27°C at the unit 35. The crystal-creation temperature is 26,5°C.

However, the crystal-creation temperature depends on the circumstances or the energy balance of the heat-exchange between chocolate and water - both in cooling and crystallization stage. Mass and water is advantageously in counter-flow. The difference between the water inlet temperature to the exchanger and the chocolate temperature at the unit 35 is then small, typically 1-2°C. In the above example the water inlet temperature is 25,5°C.

A desired output temperature for the ready crystallized mass to be obtained at the second temperature measurement unit 39, is also pre-set via the control screen 37. For the particular recipe of milk chocolate, it could for example be 26°C. The water circuit of the column 2 is controlled automatically, so that when the water flow through the chambers 5 of the elements, the mass is cooled accurately enough for obtaining the desired pre-set temperature when it is leaving the crystallization column through the output conduit 38. The gear motor 8 continuously revolves the shaft 7 with the mixing propels 10, thereby mixing the created crystals up into the mass.

When the milk chocolate having a temperature of 27°C and the water temperature of the crystallization stage of the column is 16-18°C, the chocolate meets cold surfaces at which crystals immediately are created at an average chocolate temperature of 26,5°C. The chocolate then leaves the crystallization stage having a temperature of 26°C. However, the output temperature of the chocolate recipe could also be raised some degrees if desired by increasing the temperatures of the cooling water in the cooling stage and in the crystallization stage.

At the specific apparatus being used for tempering of milk chocolate mass, the inventive apparatus according to figures 1-6 has a maximum capacity of 4000 kg of milk chocolate per hour. When orientated as in figures 1 and 2, the cooling stage heat exchanger 11 has the dimensions of width: 500 mm and height: 250 mm. The horizontal depth of the exchanger 11 is measured in the stacking direction of the plates 12. It is 300 mm when 35 plates 12 are stacked with an average width of each of the channels 16 or 17 of 3 mm. The total effective heat exchange area of the plates 12 are then around 8 m2.

The crystallization stage column 2 constitutes of four elements 3 each having a diameter of 650 mm.

Due to the parallel cooling provided in the inventive cooling stage heat exchanger, it is possible to provide a uniform and homogenous mass, that can be controlled sharply in temperature. Creation of any crystals and especially undesirable, lower melting crystals such as βIV-crystals and α-crystals in chocolate mass are then avoided though the mass is cooled to a temperature within tenth of a degree above the highest crystals creation temperature for the particular mass.
In the present example of the inventive apparatus according to figures 1-6, the crystallization stage column 2 is further controllable to such extent, that the milk chocolate mass is kept homogenous, and only a slight temperature lowering of 0,5-1,0°C through the column 2 is obtained. The desirable, stable βV-crystals are then created in the mass, however, lower melting, unstable crystals are avoided. It is then possible to avoid any re-heating stage on top of the crystallization stage of the column for melting out again such undesirable and unstable crystals.

In the above examples with the certain recipe of milk chocolate the cooling process is controlled so that the crystal-creation temperature is 26,5°C.. However, it is also possible to "depress" or lower the crystal-creation temperature of the mass further such as by increasing the flow of the water, by lowering the water temperature or by lowering the flow of the chocolate mass.
By doing so the crystal-creation temperature for the particular milk chocolate mass as well as for all types of mass having a content of genuine cocoa butter can advantageously be lowered to the interval of between 23°C and 26°C. Then is an "under-cooling" of the chocolate mass achieved. When the crystal-creation temperature is depressed to the lowest possible for BetaV crystals at 23°C, and the temperature of the mass is cooled to slightly above 23°C, such as a few tenth of a degree above or such as to 24-25 °C the process is especially effective. The energy consumption is the lowest possible and the heat energy released by the solidifying articles of the crystallised mass is the lowest possible.

The temperature of the water entering the cooling stage is preferable a few tenth of a degree up to 2,0°C colder than the mass leaving the cooling stage, thereby, the temperature of the water entering the stage is above 19°C and below 25°C.
When the mass is milk-chocolate, the temperature of the cooling water is 24°C and the temperature of the milk chocolate mass is 25°C when cooled passing the unit 35, and the temperature of the milk chocolate mass is 24,5°C when having passed through the crystallization stage.

Decisive is also, that no shear is provided to the mass in the cooling stage such as being done by the cooling stage stirring elements of the prior art processes. The thin rows of plate-like streams in the cooling process provides for a complete homogenous heat exchange of all mass parts through the cooling stage so that the complete mass is in a "sharp" and homogeneous energy balance maintaining that no crystals are created - neither in-stable crystals nor the desirable, stable BetaV crystals.

The applied "sur-plus" cooling energy is so to say accumulated and ready to be released directly as crystallization energy of the BetaV crystals when shear or "shear energy" provided by mixing elements or scraper elements is applied. So, when all the mass streams are cooled and collected in a complete stream, appliance of shear energy is the only necessary parameter for the desirable BetaV crystals to be created in the mass. The temperature of the mass is kept constant or lowered slightly up to 1,0°C passing through the crystallization stage. The effect applies for all mass recipes having a content of cocoa butter which is able to crystallize into BetaV crystals. It is observed that the mass crystallizes directly into the BetaV crystals only - no other crystal-types are created. Consequently, the reheating stage of the process and columns is avoided and can be omitted.

The process is then highly quality ensuring for the tempered mass and the final articles. It is also reducing the energy consumption for the complete process considerably.

When chocolate raw mass such as cocoa liquor or cocoa butter is tempered by the inventive process and deposited in major moulds for making chocolate tablets or bricks with a weight from 2,5 kg up to 500 kg, the solidification time is reduced at least to a third of before. The tablets and blocks of 2,5 kg, 5 kg, 25 kg, 50 kg, 100 kg and 500 kg are tested. They are firm and solid in the centers allready after a few hours having a content of BetaV crystals and no Beta IV or other undesirable crystal-types. Quality is improved which is really important for the manufacturers as the blocks serve as raw materials for cholate recipes applied by the producers of chocolate articles. Expensive cooling time and handling is spared as the blocks releases the moulds nicely as BetaV crystals always contracts a few percent at solidification.

When applying the process for tempering of chocolate mass in a moulding line, the articles being deposited in multiple cavities in plastic moulds which are thereafter continuously passing through a cooling tunnel, then the articles or shells solidifies very fast in comparison with the prior art process. The articles have no remains of latent heat which must be removed during cooling in the tunnel. Instead, the heat to be removed from the articles are vanishing and just blowing air through the tunnel without applying cooling energy is satisfactory. The cooling tunnels can be shortened in length more than 50%. The quality of the articles are the highest possible having a content of stable BetaV crystals only.

The same advantages apply when the inventive process is used for tempering of chocolate mass in an enrobing line being deposited on pre-made article centers which are thereafter continuously passing through a cooling tunnel. The enrobed chocolate layer is top-quality and solidification thereof is fast.

When the inventive process is used for tempering of chocolate mass to be deposited in cavities in plastic moulds and pressed by immersed cold plungers thereby making chocolate shells the solidification is so fast and without any remaining heat to be removed that the cooling tunnel can be avoided.

When the inventive process is used for tempering of chocolate mass to be deposited as drops or lumps or chips or the like spots on an underlying continuously driven steel or plastic web the chocolate articles solidifies in a few seconds on the colder web. For many of these productions the cooling tunnels can be omitted.

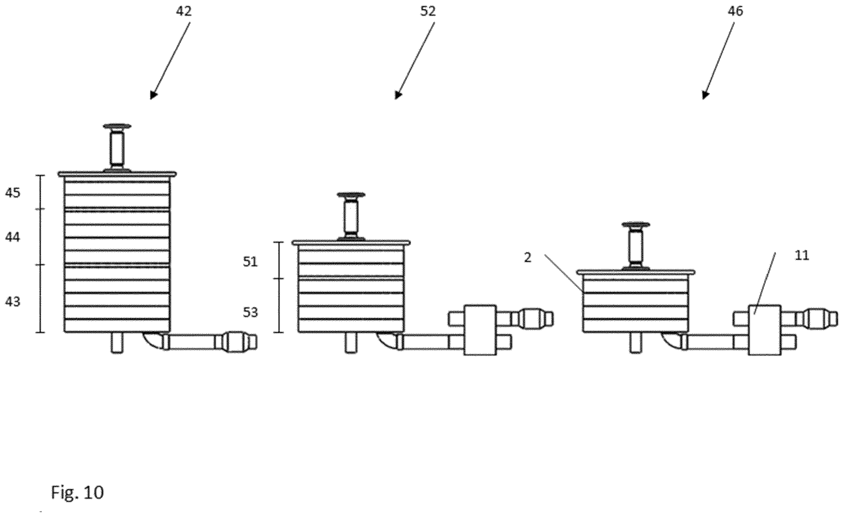

In figure 10 is schematically disclosed a prior art column 42 having a maximum capacity of tempering 4000 kg milk chocolate per hour. The column 42 has a cooling stage 43 of 5 elements height, a crystallization stage 44 of 4 elements height and a re-heating stage 45 of 2 elements height. A total of 11 elements constitute the height of the column 42. In the cooling stage 43 are the mass and the water in counter-flow, and the water is cold, typically 10-14°C for providing the necessary cooling effect on the mass with that capacity. Different types of crystals are then created in especially chocolate mass, such as the milk chocolate mass. Consequently, the re-heating stage 45 is necessary to melt out the undesirable, lower melting crystals again.

To the difference from the 11 elements height of the prior art column 42, the column 2 of the inventive apparatus 46 only requires a column having a height of 4 elements. The building height and the center of gravity of the inventive apparatus 46 is then much lower than for the prior art column 42 as seen in figure 10.

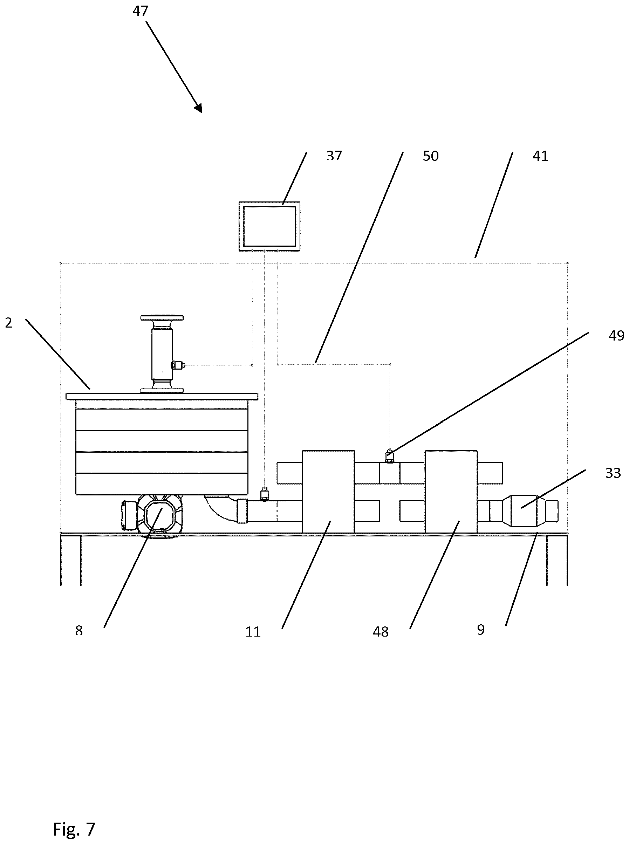

In figure 7 is disclosed the inventive apparatus 47 having all the parts of the apparatus 1 of figures 1-6. Furthermore, is under the housing 41 arranged a further inventive heat exchanger 48, which is used for heating up the supplied mass to a crystal-free temperature before entering the cooling stage heat exchanger 11. By the prior art columns 42, such pre-heating stage is arranged with even further elements 3 in front of the cooling stage 43, i.e. at the bottom of the column 42 in figure 10. The column then grows in height and becomes even more difficult to handle and transport.

The heat exchanger 48 providing the pre-heating stage is arranged at the support 9 and preserves the low center of gravity. A further temperature measurement unit 49 is arranged in the tube-connection between the heat exchangers 48 and 11. The unit 49 is wired 50 to the control screen 37, so that the mass temperature is controlled to a desired level, such as 45-50°C for chocolate mass before entering the cooling stage exchanger 11.

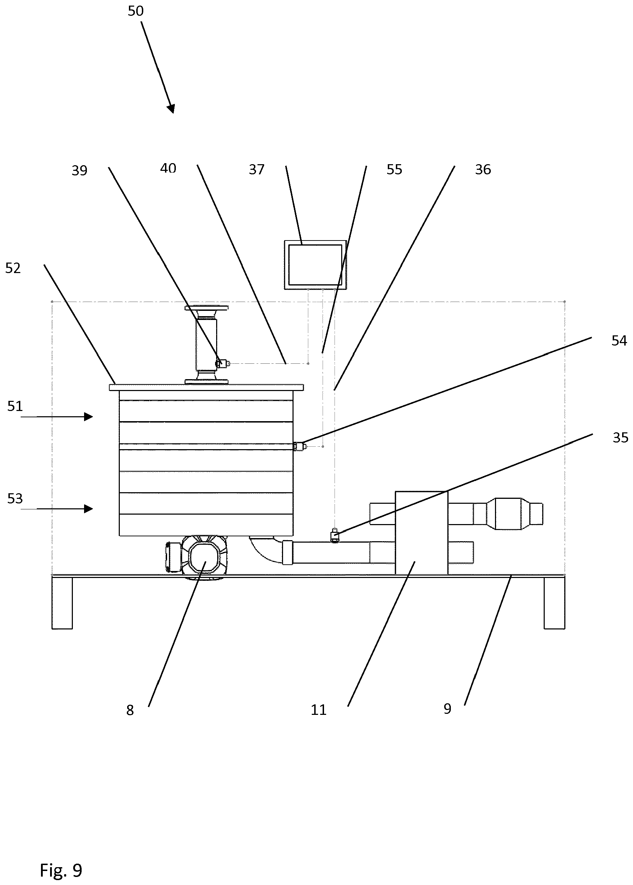

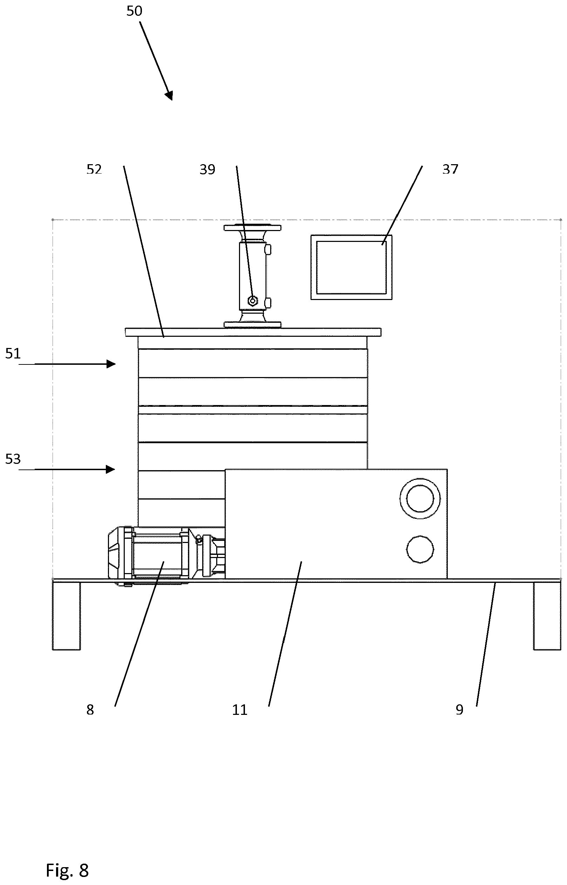

In figure 8 and 9 are disclosed another embodiment 50 of the inventive apparatus. In in excess to the apparatus 1 of figures 1-6, the apparatus 50 of figures 8, 9 has an upper re-heating stage 51 arranged in further elements 3 on top of the column 2 of figures 1 and 2.
The column 52 of the tempering apparatus 50 then constitutes both a crystallization stage 53 and a re-heating stage 51 upon that. A further temperature measurement unit 54 is inserted in between the crystallization stage 53 and the re-heating stage 51 and is wired to the control screen 37. This embodiment is necessary when it is not possible to avoid undesirable crystals in the mass during its passage through the crystallization stage 53 of the column 52. The pre-set temperature to be achieved at the unit 39 is then set to be slightly higher than the temperature to be achieved at the unit 54 after the crystallization stage. The temperature could typically be 0,5-1,0°C higher at the unit 39 than at the unit 54. The height of the column 52 is disclosed in figure 10 for comparison with the much higher prior art column 42.
- 1:: apparatus for continuous tempering
- 2:: column
- 3:: cast-iron element
- 4:: mass chamber
- 5:: water chamber
- 6:: gasket
- 7:: shaft
- 8:: gear motor
- 9:: frame or support
- 10:: mixing elements
- 11:: plate heat exchanger
- 12:: plates
- 13:: stack of plates
- 14:: edges of plates
- 15:: gaskets
- 16:: mass channels
- 17:: water channels
- 18:: hole
- 19:: hole
- 20:: hole
- 21:: hole
- 18':: common first inlet channel for mass
- 19':: common first outlet channel for mass
- 20':: common second inlet channel for water
- 21':: common second outlet channel for water
- 22:: cubic box
- 23-28:: side panels
- 29:: mass inlet tube part
- 30:: mass outlet tube part
- 31:: water inlet tube part
- 32:: water outlet tube part
- 33:: mass pump
- 34:: mass conduit
- 35:: temperature measurement unit
- 36:: electrical wire
- 37:: control screen
- 38:: mass outlet conduit
- 39:: temperature measurement unit
- 40:: electrical wire
- 41:: housing
- 42:: prior art tempering column
- 43:: cooling stage
- 44:: crystallization stage
- 45:: re-heating stage
- 46:: inventive apparatus
- 47:: inventive tempering apparatus
- 48:: heat exchanger
- 49:: temperature measurement unit
- 50:: another embodiment of tempering apparatus
- 51:: re-heating stage
- 52:: column
- 53:: crystallization stage
- 54:: temperature measurement unit
- 55:: wiring

## Claims

1. Process for continuous tempering of a fat-containing, crystallizable mass, such as chocolate mass, nougat mass or creme mass being crystal-free and is pumped as a complete stream to a cooling stage in which it is cooled to above the crystal-creation temperature so that the particular mass is still crystal-free, whereafter the mass is pumped through a crystallization stage in a column comprising of mass chambers (4) and intermediary water chambers (5) arranged in stacked elements (3), a central drive shaft (7) in engagement with mixing and shearing elements (10) arranged in the mass chambers (4), so that crystals have been created in the mass when leaving the crystallization stage,
**characterized in,**
**that** when entering the cooling stage the mass is divided into a row of several parallel, plate-like streams of mass, which are simultaneously cooled by a row of intermediary, plate-like streams of cooling water until the mass is being collected again to a complete stream.

2. Process according to claim 1, **characterized in, that** the mass is cooled to a temperature, which is above 23°C and below 26°C.

3. Process according to claim 1, **characterized in, that** the direction of flow of the row of plate-like streams of mass are the opposite of the direction of flow of the row of intermediary, plate-like streams of cooling water.

4. Process according to claim 2, **characterized in, that** the temperature of the water entering the cooling stage is a few tenth of a degree up to 2,0°C colder than the mass leaving the cooling stage.

5. Process according to claim 2, **characterized in, that** the temperature of the water entering the cooling stage is above 19°C and below 25°C.

6. Process according to claim 1, **characterized in, that** the temperature of the mass is kept constant or lowered up to 1,0°C passing through the crystallization stage.

7. Process according to one or more of the claims 1 to 3, **characterized in, that** the mass is milk-chocolate, that the temperature of the cooling water is 24°C and the temperature of the milk chocolate mass is 25°C when having passed through the cooling stage, and that the temperature of the milk chocolate mass is 24,5°C when having passed through the crystallization stage.

8. Process according to one or more of claims 1 to 6 for tempering of chocolate raw mass such as cocoa liquor or cocoa butter to be deposited in major moulds for making chocolate tablets or bricks with a weight up to 500 kg.

9. Process according to one or more of claims 1 to 6 for tempering of chocolate mass in a moulding line being deposited in multiple cavities in plastic moulds which are thereafter continuously passing through a cooling tunnel.

10. Process according to one or more of claims 1 to 6 for tempering of chocolate mass in an enrobing line being deposited on pre-made article centers which are thereafter continuously passing through a cooling tunnel.

11. Process according to one or more of claims 1 to 6 for tempering of chocolate mass to be deposited in cavities in plastic moulds and pressed by immersed cold plungers thereby making chocolate shells.

12. Process according to one or more of claims 1 to 6 for tempering of chocolate mass to be deposited as drops or lumps or chips or the like spots on an underlying continuously driven steel or plastic web.

13. Use of apparatus (1) comprising a cooling stage connected with a crystallisation stage, comprising a column (2) of mass chambers (4) and intermediary water chambers (5) arranged in stacked elements (3), a central drive shaft (7) in engagement with mixing elements (10) arranged in the mass chambers (4), and which crystallisation stage is arranged in the column (2), that the cooling stage is arranged in a heat exchanger (11) having at least one row of parallel plates (12) arranged in a stack (13) sealed at their edges (14) providing intermediary, neighbouring channels (16, 17) each having an inlet hole (18, 20) and an outlet hole (19, 21) in each of the plates (12), that every second channel (16) in the row is connected with a common first inlet channel (18') created by the first inlet holes (18) in the plates (12) and a common first outlet channel (19') created by the first outlet holes (19) in the plates (12) for the flow of mass there through, and that each of the intermittent, neighbouring channels (17) are connected with a common second inlet channel (20') created by the second inlet holes (20) in the plates (12) and a common second outlet channel (21') created by the second outlet holes (21) in the plates (12) for the flow of water medium there through for continuous tempering of a fat-containing, crystallisable mass such as chocolate mass or creme mass.

14. Use according to claim 13 for tempering of chocolate raw mass such as cocoa liquor or cocoa butter to be deposited in major moulds for making chocolate tablets or bricks with a weight up to 500 kg.

15. Use according to claim 13 for tempering of chocolate mass in a moulding line being deposited in multiple cavities in plastic moulds which are thereafter continuously passing through a cooling tunnel.

16. Use according to claim 13 for tempering of chocolate mass in an enrobing line being deposited on pre-made article centers which are thereafter continuously passing through a cooling tunnel.

17. Use according to claim 13 for tempering of chocolate mass to be deposited in cavities in plastic moulds and pressed by immersed cold plungers thereby making chocolate shells.

18. Use according to claim 13 for tempering of chocolate mass to be deposited as drops or lumps or chips or the like spots on an underlying continuously driven steel or plastic web.

## Patentansprüche

1. Verfahren zum kontinuierlichen Temperieren einer fetthaltigen, kristallisierbaren Masse, wie etwa Schokoladenmasse, Nougatmasse oder Crememasse, wobei diese frei von Kristallen ist und als Vollstrom in eine Kühlstufe gepumpt wird, in welcher sie derart gekühlt wird, dass sie oberhalb der Kristallbildungstemperatur bleibt, sodass diese bestimmte Masse frei von Kristallen bleibt, woraufhin die Masse durch eine Kristallisationsstufe gepumpt wird, die sich in einer Säule befindet, welche sich aus Massekammern (4) und dazwischen befindlichen Wasserkammern (5) zusammensetzt, die in gestapelten Elementen (3) angeordnet sind, wobei eine mittige Antriebswelle (7) in Misch- und Scherelemente (10) eingreift, welche in den Massekammern (4) angeordnet sind, sodass sich Kristalle gebildet haben, wenn die Masse die Kristallisationsstufe verlässt,
**dadurch gekennzeichnet,**
**dass** die Masse, wenn sie in die Kühlstufe gelangt, in eine Reihe von mehreren parallelen, plattenartigen Masseströmen aufgeteilt wird, die gleichzeitig durch eine Reihe dazwischen befindlicher, plattenartiger Kühlwasserströme gekühlt werden, bis die Masse wieder zu einem Vollstrom zusammengeführt wird.

2. Verfahren gemäß Anspruch 1, **dadurch gekennzeichnet, dass** die Masse auf eine Temperatur gekühlt wird, die mehr als 23 °C und weniger als 26 °C beträgt.

3. Verfahren gemäß Anspruch 1, **dadurch gekennzeichnet, dass** die Strömungsrichtung der Reihe von plattenartigen Masseströmen der Strömungsrichtung der Reihe von dazwischen befindlichen, plattenartigen Kühlwasserströmen entgegengesetzt ist.

4. Verfahren gemäß Anspruch 2, **dadurch gekennzeichnet, dass** die Temperatur des Wassers, welches in die Kühlstufe gelangt, einige Zehntel Grad und bis zu 2,0 °C kälter als die Masse ist, welche die Kühlstufe verlässt.

5. Verfahren gemäß Anspruch 2, **dadurch gekennzeichnet, dass** die Temperatur des Wassers, welches in die Kühlstufe gelangt, mehr als 19 °C und weniger als 25 °C beträgt.

6. Verfahren gemäß Anspruch 1, **dadurch gekennzeichnet, dass** die Temperatur der Masse, wenn diese die Kristallisationsstufe durchströmt, konstant gehalten oder um bis zu 1,0 °C verringert wird.

7. Verfahren gemäß einem oder mehreren der Ansprüche 1 bis 3, **dadurch gekennzeichnet, dass** es sich bei der Masse um Milchschokolade handelt, dass die Temperatur des Kühlwassers 24 °C beträgt und die Temperatur der Milchschokoladenmasse 25 °C beträgt, nachdem sie durch die Kühlstufe geströmt ist, und dass die Temperatur der Milchschokoladenmasse 24,5 °C beträgt, nachdem sie durch die Kristallisationsstufe geströmt ist.

8. Verfahren gemäß einem oder mehreren der Ansprüche 1 bis 6, zum Temperieren von Schokoladenrohmasse wie etwa Kakaomasse oder Kakaobutter, wobei diese in große Formen eingebracht werden soll, um Schokoladentafeln oder -blöcke mit einem Gewicht von bis zu 500 kg herzustellen.

9. Verfahren gemäß einem oder mehreren der Ansprüche 1 bis 6, zum Temperieren von Schokoladenmasse in einer Formgebungsstraße, wobei diese in mehrere Hohlräume eingebracht soll, welche sich in Kunststoffformen befinden, die anschließend kontinuierlich einen Kühltunnel durchlaufen.

10. Verfahren gemäß einem oder mehreren der Ansprüche 1 bis 6, zum Temperieren von Schokoladenmasse in einer Überzugsstraße, wobei diese mittig auf vorgefertigte Gegenstände aufgebracht soll, welche anschließend kontinuierlich einen Kühltunnel durchlaufen.

11. Verfahren gemäß einem oder mehreren der Ansprüche 1 bis 6, zum Temperieren von Schokoladenmasse, wobei diese in Hohlräume in Kunststoffformen eingebracht und durch Eintauchen von kalten Druckstempeln komprimiert werden soll, um auf diese Weise Schokoladenhüllen herzustellen.

12. Verfahren gemäß einem oder mehreren der Ansprüche 1 bis 6, zum Temperieren von Schokoladenmasse, wobei diese als Tropfen oder Klumpen oder Stückchen oder ähnliches punktartig auf eine Unterlage aus kontinuierlich vorgeschobenem Stahl oder Kunststoffgewebe aufgebracht werden soll.

13. Verwendung einer Vorrichtung (1), die eine Kühlstufe umfasst, welche mit einer Kristallisationsstufe in Verbindung steht, wobei sie eine Säule (2) aus Massekammern (4) und dazwischen befindlichen Wasserkammern (5) umfasst, die in gestapelten Elementen (3) angeordnet sind, wobei eine mittige Antriebswelle (7) in Mischelemente (10) eingreift, welche in den Massekammern (4) angeordnet sind, und wobei die Kristallisationsstufe in der Säule (2) angeordnet ist, wobei die Kühlstufe in einem Wärmetauscher (11) angeordnet ist, der mindestens eine Reihe paralleler Platten (12) aufweist, die in einem Stapel (13) angeordnet sind, wobei ihre Kanten (14) fest verschlossen sind, sodass dazwischen befindliche benachbarte Kanäle (16, 17) bereitgestellt werden, die jeweils eine Einlassöffnung (18, 20) und eine Auslassöffnung (19, 21) in jeder der Platten (12) aufweisen, wobei jeder zweite Kanal (16) in der Reihe mit einem gemeinsamen ersten Einlasskanal (18'), welcher von den ersten Einlassöffnungen (18) in den Platten (12) gebildet wird, und einem gemeinsamen ersten Auslasskanal (19'), welcher von den ersten Auslassöffnungen (19) in den Platten (12) gebildet wird, in Verbindung steht, wobei weiterhin jeder der dazwischenliegenden benachbarten Kanäle (17) mit einem gemeinsamen zweiten Einlasskanal (20'), welcher von den zweiten Einlassöffnungen (20) in den Platten (12) gebildet wird, und einem gemeinsamen zweiten Auslasskanal (21'), welcher von den zweiten Auslassöffnungen (21) in den Platten (12) gebildet wird, in Verbindung steht, damit ein Wassermedium hindurchströmt, um eine fetthaltige, kristallisierbare Masse, wie etwa Schokoladenmasse oder Crememasse, kontinuierlich zu temperieren.

14. Verwendung gemäß Anspruch 13, zum Temperieren von Schokoladenrohmasse wie etwa Kakaomasse oder Kakaobutter, wobei diese in große Formen eingebracht werden soll, um Schokoladentafeln oder -blöcke mit einem Gewicht von bis zu 500 kg herzustellen.

15. Verwendung gemäß Anspruch 13, zum Temperieren von Schokoladenmasse in einer Formgebungsstraße, wobei diese in mehrere Hohlräume eingebracht soll, welche sich in Kunststoffformen befinden, die anschließend kontinuierlich einen Kühltunnel durchlaufen.

16. Verwendung gemäß Anspruch 13, zum Temperieren von Schokoladenmasse in einer Überzugsstraße, wobei diese mittig auf vorgefertigte Gegenstände aufgebracht soll, welche anschließend kontinuierlich einen Kühltunnel durchlaufen.

17. Verwendung gemäß Anspruch 13, zum Temperieren von Schokoladenmasse, wobei diese in Hohlräume in Kunststoffformen eingebracht und durch Eintauchen von kalten Druckstempeln komprimiert werden soll, um auf diese Weise Schokoladenhüllen herzustellen.

18. Verwendung gemäß Anspruch 13, zum Temperieren von Schokoladenmasse, wobei diese als Tropfen oder Klumpen oder Stückchen oder ähnliches punktartig auf eine Unterlage aus kontinuierlich vorgeschobenem Stahl oder Kunststoffgewebe aufgebracht werden soll.

## Revendications

1. Procédé de tempérage continu d'une masse cristallisable contenant des matières grasses, telle qu'une masse de chocolat, une masse de nougat ou une masse de crème étant dépourvue de cristaux et étant pompée sous forme de courant complet vers une étape de refroidissement dans laquelle elle est refroidie jusqu'à une température supérieure à la température de création de cristaux de sorte que la masse particulière soit toujours dépourvue de cristaux, après quoi la masse est pompée vers une étape de cristallisation dans une colonne constituée de chambres de masse (4) et de chambres aqueuses intermédiaires (5) disposées en éléments empilés (3), un arbre de transmission central (7) en prise avec des éléments de malaxage et de cisaillement (10) disposé dans les chambres de masse (4), de sorte que les cristaux ont été créés dans la masse en quittant l'étape de cristallisation,
**caractérisé en ce que**
lors de l'entrée dans l'étape de refroidissement, la masse est divisée en un rang de plusieurs courants de masse parallèles de type plaque qui sont refroidis simultanément par un rang de courants d'eau de refroidissement intermédiaires de type plaque jusqu'à ce que la masse soit de nouveau récupérée en un courant complet.

2. Procédé selon la revendication 1, **caractérisé en ce que** la masse est refroidie jusqu'à une température qui est supérieure à 23°C et inférieure à 26°C.

3. Procédé selon la revendication 1, **caractérisé en ce que** le sens de l'écoulement du rang de courants de masse de type plaque est opposé au sens de l'écoulement du rang de courants d'eau de refroidissement intermédiaires de type plaque.

4. Procédé selon la revendication 2, **caractérisé en ce que** la température de l'eau entrant dans l'étape de refroidissement est de quelques dixièmes de degré jusqu'à 2,0°C plus froide que la masse quittant l'étape de refroidissement.

5. Procédé selon la revendication 2, **caractérisé en ce que** la température de l'eau entrant dans l'étape de refroidissement est supérieure à 19°C et inférieure à 25°C.

6. Procédé selon la revendication 1, **caractérisé en ce que** la température de la masse est maintenue constante ou abaissée jusqu'à 1,0°C en passant dans l'étape de cristallisation.

7. Procédé selon l'une ou plusieurs parmi les revendications 1 à 3, **caractérisé en ce que** la masse est du chocolat au lait, la température de l'eau de refroidissement est de 24°C et la température de la masse de chocolat au lait est de 25°C après avoir passé l'étape de refroidissement, et que la température de la masse de chocolat au lait est de 24,5°C après avoir passé l'étape de cristallisation.

8. Procédé selon l'une ou plusieurs parmi les revendications 1 à 6, pour le tempérage d'une masse brute de chocolat telle que de la liqueur de cacao ou du beurre de cacao à déposer dans des moules majeurs destinés à fabriquer des tablettes ou des briques de chocolat ayant un poids allant jusqu'à 500 kg.

9. Procédé selon l'une ou plusieurs parmi les revendications 1 à 6, pour le tempérage d'une masse de chocolat dans une ligne de moulage étant déposée dans des cavités multiples dans des moules en plastique qu'on fait ensuite passer en continu dans un tunnel de refroidissement.

10. Procédé selon l'une ou plusieurs parmi les revendications 1 à 6, pour le tempérage d'une masse de chocolat dans une ligne d'enrobage étant déposée sur des centres d'articles préfabriqués qu'on fait ensuite passer en continu dans un tunnel de refroidissement.

11. Procédé selon l'une ou plusieurs parmi les revendications 1 à 6, pour le tempérage d'une masse de chocolat à déposer dans des cavités dans des moules en plastique et à presser par des pistons froids immergés, produisant ainsi des coquilles en chocolat.

12. Procédé selon l'une ou plusieurs parmi les revendications 1 à 6, pour le tempérage d'une masse de chocolat à déposer sous forme de gouttes ou de mottes ou de chips ou de gouttelettes similaires sur une toile en plastique ou en acier sous-jacente à entraînement permanent.

13. Utilisation d'un appareil (1) comprenant une étape de refroidissement couplée à une étape de cristallisation, comprenant une colonne (2) constituée de chambres de masse (4) et de chambres aqueuses intermédiaires (5) disposées en éléments empilés (3), un arbre de transmission central (7) en prise avec des éléments de malaxage (10) disposé dans les chambres de masse (4), laquelle étape de cristallisation étant disposée dans la colonne (2), l'étape de refroidissement étant disposée dans un échangeur thermique (11) ayant au moins un rang de plaques parallèles (12) disposées en pile (13) scellée au niveau de leurs bords (14) fournissant des canaux intermédiaires voisins (16, 17) ayant chacun un trou d'entrée (18, 20) et un trou de sortie (19, 21) dans chacune des plaques (12), un canal sur deux (16) dans le rang étant couplé à un premier canal d'entrée commun (18') créé par les premiers trous d'entrée (18) dans les plaques (12) et un premier canal de sortie commun (19') créé par les premiers trous de sortie (19) dans les plaques (12) pour y laisser passer l'écoulement de masse, et chacun des canaux intermittents voisins (17) étant couplés à un deuxième canal d'entrée commun (20') créé par les deuxièmes trous d'entrée (20) dans les plaques (12) et un deuxième canal de sortie commun (21') créé par les deuxièmes trous de sortie (21) dans les plaques (12) pour y laisser passer l'écoulement de milieu aqueux pour le tempérage continu d'une masse cristallisable contenant des matières grasses, telle qu'une masse de chocolat ou une masse de crème.

14. Utilisation selon la revendication 13, pour le tempérage d'une masse brute de chocolat telle que de la liqueur de cacao ou du beurre de cacao à déposer dans des moules majeurs destinés à fabriquer des tablettes ou des briques de chocolat ayant un poids allant jusqu'à 500 kg.

15. Utilisation selon la revendication 13, pour le tempérage d'une masse de chocolat dans une ligne de moulage étant déposée dans des cavités multiples dans des moules en plastique qu'on fait ensuite passer en continu dans un tunnel de refroidissement.

16. Utilisation selon la revendication 13, pour le tempérage d'une masse de chocolat dans une ligne d'enrobage étant déposée sur des centres d'articles préfabriqués qu'on fait ensuite passer en continu dans un tunnel de refroidissement.

17. Utilisation selon la revendication 13, pour le tempérage d'une masse de chocolat à déposer dans des cavités dans des moules en plastique et à presser par des pistons froids immergés, produisant ainsi des coquilles en chocolat.

18. Utilisation selon la revendication 13, pour le tempérage d'une masse de chocolat à déposer sous forme de gouttes ou de mottes ou de chips ou de gouttelettes similaires sur une toile en plastique ou en acier sous-jacente à entraînement permanent.
